# EUROPÄISCHE PATENTSCHRIFT

(11) **EP 1 734 057 B1**
(45) Veröffentlichungstag und Bekanntmachung des Hinweises auf die Patenterteilung: **25.03.2009**
(21) Anmeldenummer: 06010664.8
(22) Anmeldetag: 24.05.2006
(51) Int. Cl.: C08F 2/00, G01K 11/12, G01K 11/16

(54) **Temperatur-, Bestrahlungs- oder Polymerisationsindikatoren**
Temperature, irradiation or polymerization indicators
Indicateurs de température, d'irradiation ou de polymérisation

(30) Priorität: 14.06.2005 DE 102005027589
(43) Veröffentlichungstag der Anmeldung: 20.12.2006
(73) Patentinhaber: Heraeus Kulzer GmbH, 63450 Hanau (DE)
(72) Erfinder: Grundler, Andreas, Dr., 42117 Wuppertal (DE)
(74) Vertreter: Kühn, Hans-Christian

(56) Entgegenhaltungen:
- US-A- 4 232 552
- US-A- 4 925 727
- IRIE M.: "Diarylethenes for Memories and Switches" CHEMICAL REVIEWS, Bd. 100, 2000, Seiten 1685-1716, XP007903422
- DAY J H: "THERMOCHROMISM" CHEMICAL REVIEWS, 1962, Seiten 65-80, XP007903418

## Beschreibung

Die Erfindung betrifft Temperatur-, Bestrahlungs- und Polymerisationsindikatoren.

Es gibt unterschiedlichste technische Anforderungen, die eine sichere, unumkehrbare Anzeige einer thermischen oder strahlungsbasierten Belastung von Werkstoffen erfordern. Es kann auch verschiedentlich von Vorteil sein, das Ende einer Polymerisationsreaktion auf einfache Weise feststellen zu können.

Thermoindikatoren zeigen z.B. den Verfall hitzeempfindlicher Arzneimittel während eines Transportes an. Solche Thermoindikatoren sind für unterschiedliche Zwecke und Temperatur bereiche kommerziell erhältlich.

Beispiele für Strahlungsindikatoren sind Streifen, die z.B. die Strahlungsbelastung der menschlichen Haut im Sonnenlicht messen und beim Erreichen einer eingestellten UV-Lichtmenge sich verfärben. Auch diese sind kommerziell erhältlich.

Im Dental- und technischen Bereich sind thermochrome und photochrome Pigmente bekannt, die Temperatur- bzw. Belichtungsänderungen anzeigen. Die meisten dieser Änderungen sind reversibel - und entsprechend auch die Indikation. Die Verwendung irreversibler Farb-Temperaturindikatoren in Prüfkörpern für Dental-Polymerisationsgeräte ist aus DE 103 09 855 B3 bekannt.

Die Erfindung betrifft Temperatur-, Bestrahlungs- und mit irreversiblem Farbumschlag von gefärbt nach farblos gemäß Anspruch 1.

Als Indikatoren eignen sich diejenigen Mitglieder dieser Stoffklassen, bei denen der Farbumschlag in Abhängigkeit der Reaktionspartner einstellbar irreversibel bzw. zumindest über einen längeren Zeitraum irreversibel ist. Die erfindungsgemäßen Mitglieder der Stoffklasse sind intensiv gefärbt und reagieren irreversibel mit Dipolarophilen wie Alkinen und Alkenen unter Ausbildung von farblosen bicyclischen Systemen. Mit irreversibel ist dabei gemeint: mindestens über einen längeren Zeitraum irreversibel. Im Falle der Alkine bilden diese unter Gasabspaltung (CO₂ oder COS oder CS₂) stabile heterocyclische 5 Ringe.

Bevorzugt sind meso-ionoischen Heterocyclen mit Strukturen der folgenden Art:

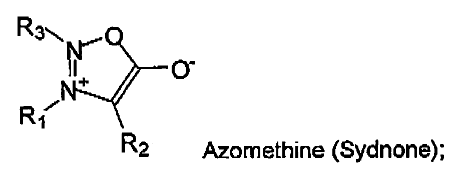

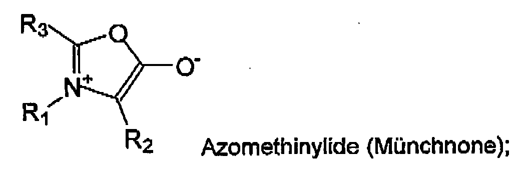

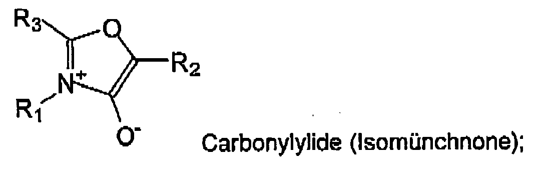

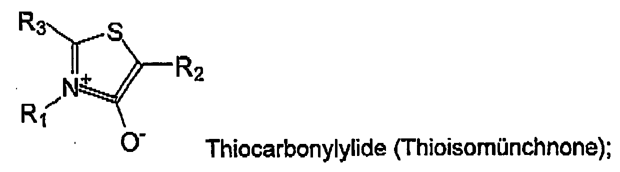

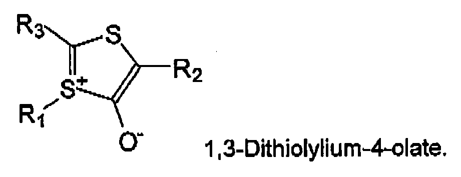

Derartige Verbindungen werden seit über 40 Jahren zur Synthese von 5-gliedrigen heterocyclischen Ringsystemen genutzt. Von zahlreichen Autoren liegen dazu Untersuchungen zur Regio- und Stereoselektivität (z.B. von Huisgen in den 60er Jahren) der Diels Alder Reaktion vor.

Überraschenderweise wurde gefunden, dass sich die oben beschriebenen Verbindungen aus der klassischen Heterozyklenchemie in hervorragender Weise zur Lösung der Aufgabe eignen, möglichst irreversible, an die jeweiligen Anforderungen gut anzupassende Thermoindikatoren, Photoindikatoren und Polymerisationsindikatoren zu entwickeln.

Die Verbindungen können als Indikatoren im Dentalbereich z.B. anzeigen, ob ein heißhärtendes Polymer ausreichend lange auf eine vorgegebene Temperatur erhitzt wurde. Eine photochemische Anwendung ist ein Indikator, der das Ende der für eine Polymerisation notwendigen Bestrahlungsmenge anzeigt, indem er sich entfärbt. Eine Anwendung, in dem einem Dentalkomposit ein Indikator beigemischt wurde, der jedoch durch Bestrahlung eine Verfärbung ausprägt, ist bereits bekannt. Hierbei wird jedoch die Verfärbung zum "Sichtbarmachen" der Komposites benutzt, damit der Behandler erkennt, bis in welche Tiefe er bei erneuter Füllungslegung exkavieren muss. Die Verfärbung ist in diesem Fall reversibel (Tetric Flow Chroma, Fa. Ivoclar-Vivadent, US020020152929A1).

Die aromatischen heterocyclischen Verbindungen der beschriebenen Art weisen je nach Größe des konjugierten Doppelbindungssystems und ihrer Konzentration eine charakteristische intensive Färbung auf.

Bei den Temperatur- und/oder Bestrahlungs- und/oder Polymerisationsindikator nach der Erfindung ist das mindestens eine Dipolarophil vorzugsweise ein ein- oder mehrfach substituiertes Alken oder Alkin, besonders ein Monomer aus der Gruppe der Acrylate und Methacrylate.

In der Reaktion mit auf die Reaktivität der Systeme abgestimmten einfach und/oder mehrfach substituierten Alkenen oder Alkinen verlieren diese ihre Farbe.

Beispiele für ein- oder mehrfach substituierte Alkene sind:
Ethen, Propen, 1-Buten, 2-Buten, Isobuten, Butadien, Pentene, Piperylen, Hexene, Hexadiene, Heptene, Octene, Diisobuten, Trimethylpenten, Nonene, Dodecen, Tridecen, Tetra- bis Eicosene, Tri- und Tetrapropen, Polybutadiene, Polyisobutene, Isoprene, Terpene, Geraniol, Linalool, Linalylacetat, Methylencyclopropan, Cyclopenten, Cyclohexen, Norbomen, Cyclohepten, Vinylcyclohexan, Vinyloxiran, Vinylcyclohexen, Styrol, Cycloocten, Cyclooctadien, Vinylnorbornen, Inden, Tetrahydroinden, Methylstyrol, Dicyclopentadien, Divinylbenzol, Cyclododecen, Cyclododecatrien, Stilben, Diphenylbutadien, Vitamin A, Betacarotin, Vinylidenfluorid, Allylhalogenide, Crotylchlorid, Methallylchlorid, Dichlorbuten, Allylalkohol, Methallylalkohol, Butenole, Butendiole, Cyclopentendiole, Pentenole, Octadienole, Tridecenole, ungesättigte Steroide, Ethoxyethen, Isoeugenol, Anethol, ungesättigte Carbonsäuren wie z. B. Acrylsäure, Methacrylsäure, Crotonsäure, Maleinsäure, Vinylessigsäure, ungesättigte Fettsäuren, wie z. B. Ölsäure, Linolsäure, Palmitinsäure, natürlich vorkommende Fette und Öle.

Als Alkine kommen ganz allgemein acetylenisch ungesättigte Kohlenwasserstoffe mit einer, zwei oder mehr Dreifachbindungen in Betracht. Zu den Alkinen einer Dreifachbindung gehört neben z. B. Propin, den Butinen, Pentinen, Hexinen, Heptinen, Octinen, Decinen und Phenylacetylen, insbesondere das Acetylen selbst. Die acetylenisch ungesättigten Kohlenwasserstoffe können auch substituiert sein und z. B. eine oder mehrere C-C-Doppelbindungen enthalten, wie z. B. 3-Methylbut-3-en-1-in, But1-en-3-in oder die mit Phenalen-Derivaten substituierten Acetylene. Beispiele für Alkine mit zwei oder mehr Dreifachbindungen sind Butadiin, die Hexadiine, die Octadiine (mit konjugierter oder nicht konjugierter Anordnung der Mehrfachbindungen), Diethinylbenzol, 1,3,5-Triethinylbenzol oder 1,2,4-Triethinylbenzol. Diese können ebenfalls substituiert sein.

Die Reaktion der beschriebenen heterocyclischen Verbindungen mit derlei Alkenen oder Alkinen kann sowohl thermisch als auch photochemisch erfolgen.

Werden die beschriebenen heterocyclischen Verbindungen z.B. einer polymerisierbaren Monomermischung aus Acrylaten oder Methacrylaten und Initiatoren (thermisch aktivierbar und/oder photochemisch aktivierbar) zugesetzt, so zeigt die Farbänderung der Mischung bei thermischer oder photochemisch durchgeführter Polymerisation das Fortschreiten der Reaktion an.

Beispiele für geeignete (Meth)Acrylate sind:
Monomere (Meth)acrylate wie Ethyleneglycoldimethacrylat EDMA, Diethylenglycoldimethacrylat, Triethylenglycoldimethacrylate TEGDMA, Glyceroldimethacrylat GDMA, Glyceroltrimethacrylate, Trimethylolpropantrimethacrylat, Pentaerythritoldimethacrylat, Pentaerythritoltrimethacrylat, Pentaerythritoltetramethacrylat, Derivate von Bisphenol A wie Bisphenol-A- dimethacrylat und Bisphenol-A-diglycoldimethacrylat, Urethanmethacrylat erhältlich aus Diisocyanaten und Hydroxyalkylmethacrylaten, sowie Reaktionsprodukte von Polyolen, Diisocyanaten und Hydroxyalkylmethacrylaten gemäß DE 37 03 080 A1 oder DE 37 03120 A1; C₁₋₁₂-, vorzugsweise C₁₋₄Alkylmethacrylate wie Methylmethacrylat, Ethylmethacrylat, n-Propylmethacrylat, Isopropylmethacrylat, n-Butylmethacrylat and t-Butylmethacrylat, Hydroxyalkyl-C₁₋₄-methacrylate wie 2-Hydroxyethylmethacrylat, 2-Hydroxypropylmethacrylat, Diethyleneglycolmonomethacrylat, Triethylenglycolmonomethacrylat, Alkoxy-C₁₋₄alkylmethacrylate wie 2-Methoxyethylmethacrylat, 3-Methoxybutylmethacrylat und Ethyltriglycolmethacrylat.

Werden die beschriebenen heterocyclischen Verbindungen und Dipolarophil wie z.B. Alken und/oder Alkin (ggf. in einem Lösungsmittel gelöst) in einem abgeschlossenen ggf. halb oder volltransparenten Reaktionsgefäß gemischt, so eignet sich dieses System als Thermoindikator um z.B. beigepackt zu thermoempfindlichen Gütern wie Arzneimitteln oder Lebensmitteln in Abhängigkeit von der Höhe und der Dauer der Belastung durch einen Farbumschlag den Zustand und die Historie der Ware anzuzeigen.

Durch Variation von Reaktionspartner und/oder Konzentration lässt sich die zum Farbumschlag benötigte Energiemenge einstellen.

Der Indikator kann durch Trennung der beschriebenen heterocyclischen Verbindungen vom und Dipolarophil z.B. durch eine deaktivierbare Trennwand gegen "Autocycloaddition" geschützt sein und kann dann frisch aktiviert werden.

Analog lässt sich das Indikatorsystem System auch gegenüber "Strahlungsbelastung" durch sichtbares und ultraviolettes Licht abstimmen. So können Indikatoren für natürliche oder Sonnenbestrahlung in Solarien hergestellt werden. Ebenso ist eine Verwendung für Kleidungsstücke in Gebieten möglich, die unter einer geringen Ozonschicht liegen ("Ozonloch"). Der Indikator zeigt dann an, dass die Strahlungsdosis für die darunterliegende Haut eine Gefahr darstellt.

Bevorzugte Applikationsformen enthalten mindestens einen Temperatur- und/oder Bestrahlungs- und/oder Polymerisationsindikator wie oben beschrieben und sind
- hermetisch gegen Stoffaustausch von außen abgeschlossen, bzw.
- transparent oder teiltransparent, so dass Farbänderungen oder -umschläge von einem Betrachter wahrgenommen werden kann.

In einer weiteren bevorzugten Applikationsform ist
- das Dipolarophil von der beschriebenen heterocyclischen Verbindung durch eine deaktivierbare Trennwand abgetrennt, wobei
- die Trennwand von außen durchstoßen (deaktiviert) werden kann.

Die Erfindung betrifft besonders auch die Verwendung der beschriebenen Photo- und/oder Thermo- und/oder Polymerisationsindikatoren oder von deren Mischungen als Thermo- oder Photoindikator für Lebensmittel/Nahrungsmittel.
Die Erfindung betrifft auch Zusammensetzungen enthaltend
- mindestens ein polymerisierbares Monomer
- mindestens eine der beschriebenen heterocyclischen Verbindungen oder mindestens einen Temperatur- und/oder Bestrahlungs- und/oder Polymerisationsindikator sowie
- optional mindestens einen Photoinitiator oder mindestens ein thermisches Initiatorsystem.

Solche Zusammensetzungen stellen vorzugsweise polymerisierbare Dentalmaterialien dar.
Die Erfindung betrifft auch ein Verfahren zur Anzeige des Reaktionsendes einer polymerisierbaren Mischung, bei dem der Mischung als Indikator eine der beschriebenen heterocyclischen Verbindungen zugesetzt wird und das Ende der Reaktion durch dessen Entfärbung angezeigt wird.

Die folgenden Beispiele erläutern die Erfindung näher, ohne sie zu beschränken:

### Beispiele

Beispielhaft ist folgend die Synthese einer der beschriebenen heterocyclischen Verbindungen und deren Reaktion mit Alkenen und Alkinen beschrieben:

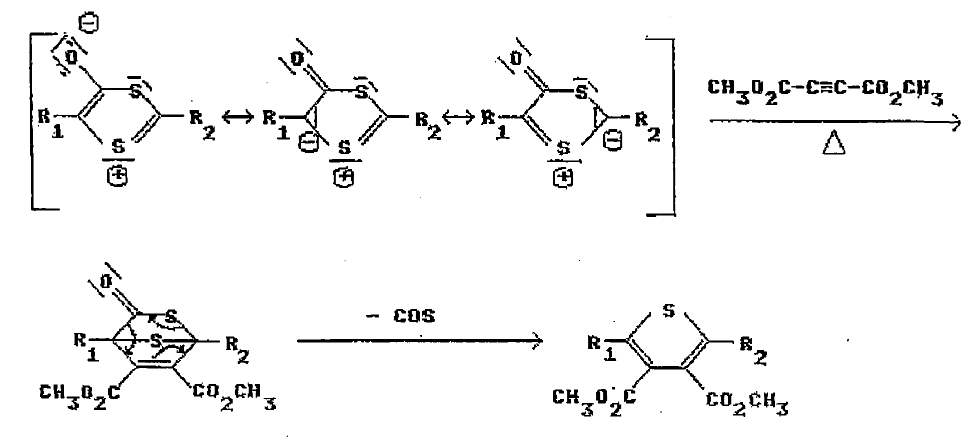

### Beispiel 1

Die Cycloaddition mit Alkenen verläuft unter Bildung eines stabilen isolierbaren Bicyclus, der seinerseits durch Dehydrierung mit Pd/C in das entsprechende Thiophenderivat überführt werden kann. Die Reaktionsabfolge ist nachfolgend abgebildet.

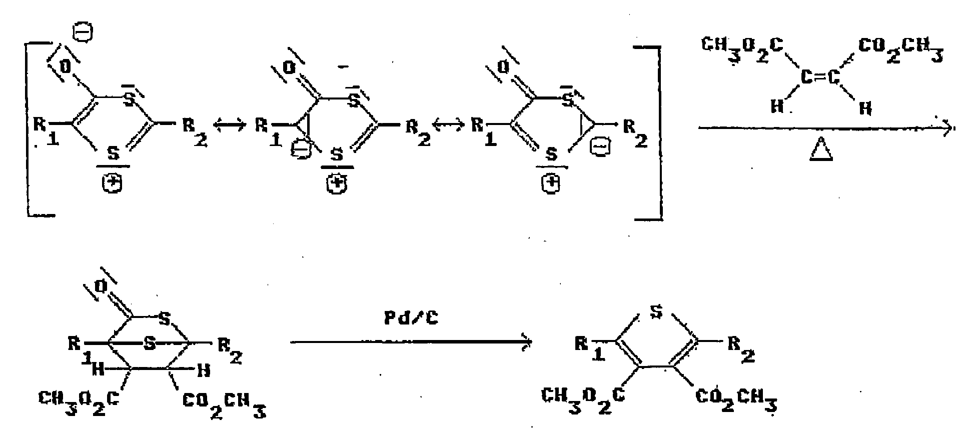

Beispiele für die verschiedenen Alkin- und Alkenderivate, mit denen das 1,3-Dithiolylium-4-olat in einer [3 + 2] Cycloaddition reagiert, finden sich in Literatur H. Gotthardt, M.C. Weisshuhn, B. Christl, Chem. Ber. 109, 740-752 (1976), H. Gotthardt, M.C. Weisshuhn, B. Christl, Chem. Ber. 109, 753-760 (1976), K.T. Potts, D.N. Roy, J. Chem. Soc. Chem. Comm. 1968, 1061, H. Gotthardt, B. Christl, Tetrahedron Letters 1968, 4751-4756 und H. Gotthardt, B. Christl, Tetrahedron Letters 1968, 4747-4749.

Den Reaktionsabschluss erkennt man dabei sowohl im Fall der Reaktion mit Alkinen zu den Thiophenderivaten als auch bei Reaktion mit Alkenen zum Addukt jeweils am Verschwinden der tiefen Eigenfarbe der jeweiligen mesoionischen Verbindung.

### Beispiel 2

Ein N-Acryloylderivat einer optisch aktiven Verbindung wird analog einer Methode zur Darstellung von N-Methacryloyl-DL-Alanin hergestellt:

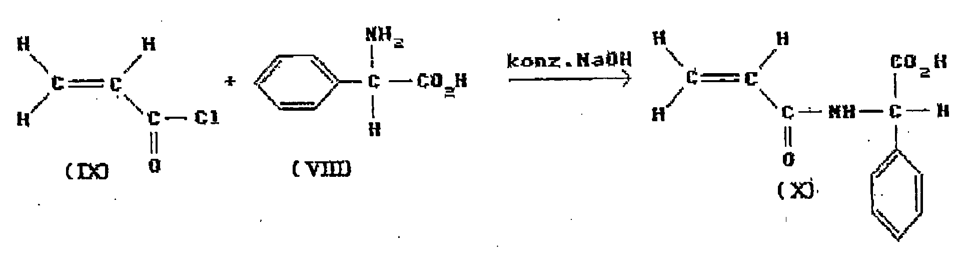

Dazu wird zu in konzentrierter Natronlauge gelöstem D,L-Phenylglycin bei 0°C die äquivalente Menge Säurechlorid getropft und das Produkt nach Ablauf der Reaktionszeit mit konz. HCl gefällt.

Die mit 35 %-iger Ausbeute ablaufende Reaktion ergibt farblose nadelförmige Kristalle, die mittel IR und NMR-Spektroskopie als N-Acryloyl-D,L-Phenylglycin identifiziert werden.

In Analogie zu bekannten [3 + 2]-Cycloadditionen zwischen 1,3-Dithiolonen und Olefinen wird eine Mischung aus N-Acryloylphenylglycin und 0,9 Moläquivalenten 2,5-Diphenyl-1-3-dithiolylium-4-olat in Toluol bei 80°C über 21 Stunden erhitzt.
Der Reaktionsablauf kann am Verschwinden der tiefvioletten Farbe des Mesoions verfolgt werden. Die ausgefallenen hellbraunen Kristalle (Schmp. 109,8°C) werden einer Umkristallation aus Petrolether/Essigester und Methanol/Wasser unterzogen.
Das Beispiel 2 zeigt die irreversible Entfärbung des Indikatorsystems bei Reaktion mit Alkenen.

## Patentansprüche

1. Temperatur- und/oder Bestrahlungs- und/oder Polymerisationsindikator mit irreversiblem Farbumschlag von gefärbt nach farblos, umfassend mindestens ein Mitglied der Gruppe der Azomethine (Sydnone), Azomethinylide (Münchnone), Carbonylylide (Isomünchnone), Thiocarbonylylide (Thioisomünchnone) und 1,3-Dithiolylium-4-olate und mindestens ein Dipolarophil.

2. Temperatur- und/oder Bestrahlungs- und/oder Polymerisationsindikator nach Anspruch 1, wobei das Dipolarophil ein ein- oder mehrfach substituiertes Alken oder Alkin ist.

3. Temperatur- und/oder Bestrahlungs- und/oder Polymerisationsindikator nach einem der vorstehenden Ansprüche, wobei das Dipolarophil ein Monomer aus der Gruppe der Acrylate und Methacrylate ist.

4. Applikationsform enthaltend mindestens einen Temperatur- und/oder Bestrahlungs- und/oder Polymerisationsindikator nach einem der vorstehenden Ansprüche,
• die hermetisch gegen Stoffaustausch von außen abgeschlossen ist,
• transparent oder teiltransparent ist, so dass Farbänderungen oder -umschläge von einem Betrachter wahrgenommen werden kann.

5. Applikationsform nach Anspruch 4,
• bei der eine deaktivierbare Trennwand das Dipolarophil und das mindestens ein Mitglied der Gruppe der Sydnone, Münchnone, Isomünchnone, Thioisomünchnone und 1,3-dithiolylium-4-olate trennt,
• die Trennwand von außen durchstoßen (deaktiviert) werden kann.

6. Verwendung eines Photo- und/oder Thermo- und/oder Polymerisationsindikators nach einem der Ansprüche 1-3 oder von deren Mischungen als Thermoindikator.

7. Verwendung eines Photo- und/oder Thermo- und/oder Polymerisationsindikators nach einem der Ansprüche 1-3 oder von deren Mischungen als Photoindikator.

8. Verwendung eines Photo- und/oder Thermo- und/oder Polymerisationsindikators nach einem der Ansprüche 1-3 oder von deren Mischungen als kombinierter Thermo- und Photoindikator.

9. Verwendung eines Photo- und/oder Thermo- und/oder Polymerisationsindikators nach einem der Ansprüche 1-3 oder von deren Mischungen als Thermo- oder Photoindikator für Lebensmittel/Nahrungsmittel.

10. Zusammensetzung enthaltend
• mindestens ein polymerisierbares Monomer
• mindestens Mitglied der Gruppe der Azomethine (Sydnone), Azomethinylide (Münchnone), Carbonylylide (Isomünchnone), Thiocarbonylylide (Thioisomünchnone) oder 1,3-Dithiolylium-4-olate oder mindestens einen Temperatur- und/oder Bestrahlungs- und/oder Polymerisationsindikator nach einem der vorstehenden Ansprüche 1 bis 2 sowie
• optional mindestens einen Photoinitiator oder mindestens ein thermisches Initiatorsystem.

11. Zusammensetzung nach Anspruch 10, die ein polymerisierbares Dentalmaterial ist.

12. Verfahren zur Anzeige des Reaktionsendes einer polymerisierbaren Mischung, bei dem der Mischung, einen Indikator nach einem der Ansprüche 1-3 zugesetzt wird und das Ende der Reaktion durch dessen Entfärbung angezeigt wird.

## Claims

1. Temperature and/or irradiation and/or polymerisation indicator with irreversible colour change from coloured to colourless, comprising at least one member of the group of the azomethines (sydnones), azomethinylides (monchnones), carbonylylides (isomünchnones), thiocarbonylylides (thioisomunchnones), and 1,3-dithiolylium-4-olate, and at least one dipolarophile.

2. Temperature and/or irradiation and/or polymerisation indicator according to claim 1, whereby the dipolarophile is a mono- or multi-substituted alkene or alkyne.

3. Temperature and/or irradiation and/or polymerisation indicator according to any one of the preceding claims, whereby the dipolarophile is a monomer from the group of the acrylates and methacrylates.

4. Form of application containing at least one temperature and/or irradiation and/or polymerisation indicator according to any one of the preceding claims,
• that is hermetically sealed against substance exchange from outside;
• that is transparent or part-transparent such that colour switches or colour changes can be perceived by an observer.

5. Form of application according to claim 4,
• in which a deactivatable separating wall separates the dipolarophile and the at least one member of the group of the syndones, münchnones, isomünchnones, thioisomünchnones, and 1,3-dithiolylium-4-olate;
• the separating wall can be perforated (deactivated) from outside.

6. Use of a photo- and/or thermo- and/or polymerisation indicator according to any one of the claims 1-3 or mixtures thereof as thermo-indicator.

7. Use of a photo- and/or thermo- and/or polymerisation indicator according to any one of the claims 1-3 or mixtures thereof as photo-indicator.

8. Use of a photo- and/or thermo- and/or polymerisation indicator according to any one of the claims 1-3 or mixtures thereof as combined thermo- and photo-indicator.

9. Use of a photo- and/or thermo- and/or polymerisation indicator according to any one of the claims 1-3 or mixtures thereof as thermo- or photo-indicator for foods/foodstuffs.

10. Composition containing
• at least one monomer that can be polymerised
• at least one member of the group of the azomethines (sydnones), azomethinylides (munchnones), carbonylylides (isomunchnones), thiocarbonylylides (thioisomünchnones) or 1,3-dithiolylium-4-olate or at least one temperature and/or irradiation and/or polymerisation indicator according to any one of the preceding claims 1 to 3, as well as
• optionally, at least one photo-initiator or at least one thermal initiator system.

11. Composition according to claim 10, which is a dental material that can be polymerised.

12. Method for indicating the end of a reaction of a mixture that can be polymerised, in which an indicator according to any one of the claims 1-3 is added to the mixture and the end of the reaction is indicated by the indicator turning colourless.

## Revendications

1. Indicateur de température et/ou d'irradiation et/ou de polymérisation avec une modification de couleur irréversible du coloré à l'incolore comprenant au moins un élément du groupe constitué de l'azométhine (sydnone), de l'azométhinylide (münchnone), du carbonylylide (isomünchnone), du thiocarbonylylide (thioisomünchnone) et du 1,3-dithiolylium-4-olate et au moins un dipolarophile.

2. Indicateur de température et/ou d'irradiation et/ou de polymérisation selon la revendication 1, dans lequel le dipolarophile est un alcène ou une alcyne une ou plusieurs fois substitué.

3. Indicateur de température et/ou d'irradiation et/ou de polymérisation selon l'une quelconque des revendications précédentes, dans lequel le dipolarophile est un monomère choisi parmi un acrylate et un méthacrylate.

4. Forme d'application contenant au moins un indicateur de température et/ou d'irradiation et/ou de polymérisation selon l'une quelconque des revendications précédentes,
• laquelle est fermée hermétiquement de l'extérieur contre un échange de matière,
• est transparente ou partiellement transparente de telle sorte qu'un observateur puisse détecter des changements ou des modifications de couleur.

5. Forme d'application selon la revendication 4,
• dans laquelle une paroi de séparation désactivable sépare le dipolarophile et le au moins un élément du groupe constitué des sydnone, münchnone, isomüchnone, thioisomüchnone, et 1,3-dithiolylium-4-olate,
• la paroi de séparation peut être percée (désactivée) de l'extérieur.

6. Utilisation d'un photo- et/ou thermo-indicateur et/ou indicateur de polymérisation selon l'une quelconque des revendications 1-3 ou de mélanges de ceux-ci comme thermo-indicateur.

7. Utilisation d'un photo- et/ou thermo-indicateur et/ou indicateur de polymérisation selon l'une quelconque des revendications 1-3 ou de mélanges de ceux-ci comme photo-indicateur.

8. Utilisation d'un photo- et/ou thermo-indicateur et/ou indicateur de polymérisation selon l'une quelconque des revendications 1-3 ou de mélanges de ceux-ci comme thermo- et photo-indicateurs combinés.

9. Utilisation d'un photo- et/ou thermo-indicateur et/ou indicateur de polymérisation selon l'une quelconque des revendications 1-3 ou de mélanges de ceux-ci comme thermo- ou photo-indicateur pour des comestibles/denrées alimentaires.

10. Composition contenant
• au moins un monomère polymérisable
• au moins un élément du groupe constitué de l'azométhine (sydnone), de l'azométhinylide (münchnone), du carbonylylide (isomünchnone), du thiocarbonylylide (thioisomünchnone) ou du 1,3-dithiolylium-4-olate ou au moins un indicateur de température et/ou d'irradiation et/ou de polymérisation selon l'une quelconque des revendications 1 à 3 précédentes ainsi que
• facultativement au moins un photo-initiateur ou au moins un système d'initiateur thermique.

11. Composition selon la revendication 10, laquelle est un matériau dentaire polymérisable.

12. Procédé pour l'indication de l'achèvement d'une réaction d'un mélange polymérisable, dans lequel on ajoute au mélange un indicateur selon l'une quelconque des revendications 1-3 et l'achèvement de la réaction est indiqué par sa décoloration.
